# EUROPÄISCHE PATENTSCHRIFT

(11) **EP 0 979 425 B1**
(45) Veröffentlichungstag und Bekanntmachung des Hinweises auf die Patenterteilung: **21.01.2004**
(21) Anmeldenummer: 98921357.4
(22) Anmeldetag: 20.03.1998
(51) Int. Cl.: G02B 5/22, G02B 5/28, G02B 21/14

(54) **ABSORBIERENDES DÜNNSCHICHTSYSTEM, BESTEHEND AUS METALLISCHEN UND DIELEKTRISCHEN SCHICHTEN**
ABSORBENT THIN-FILM SYSTEM CONSISTING OF METAL AND DIELECTRIC FILMS
SYSTEME A COUCHES MINCES ABSORBANT, CONSTITUE DE COUCHES METALLIQUES ET DIELECTRIQUES

(30) Priorität: 30.04.1997 DE 19718146
(43) Veröffentlichungstag der Anmeldung: 16.02.2000
(73) Patentinhaber: Leica Microsystems Wetzlar GmbH, 35530 Wetzlar (DE)
(72) Erfinder: EISENKRÄMER, Frank, D-35444 Biebertal (DE)
(74) Vertreter: Reichert, Werner F., Dr.
(86) Internationale Anmeldenummer: PCT/DE1998/000819
(87) Internationale Veröffentlichungsnummer: WO 1998/049584

(56) Entgegenhaltungen:
- DE-A- 2 848 294
- US-A- 3 781 089
- US-A- 3 859 131
- US-A- 4 960 310
- US-A- 5 046 834

## Beschreibung

Die Erfindung betrifft einen Hoffman-Modulator für Kontrastierverfahren in der Mikroskopie.

Zu den modemen Mikroskopier-Techniken gehören seit längerer Zeit sogenannte optische Kontrastierverfahren, wie beispielsweise Dunkelfeld, schiefe Beleuchtung, Interferenzkontrast, Polarisationskontrast, Reliefkontrast und andere. Diese Verfahren greifen auf bestimmte physikalische Eigenschaften der mikroskopischen Präparate zurück und ermöglichen ohne weitere Beeinträchtigungen am zu beobachtenden Objekt eine "kontrastierende" Wirkung.

Aus der US-PS 4 200 353 ist beispielsweise eine Modulations-Kontrast-Anordnung nach Hoffman bekannt. Nachteilig ist bei diesem Verfahren, dass aufgrund der undefinierten Phasenlage eines Hoffman-Modulators unerwünschte Farbsäume beim Betrachten des Bildes entstehen. Außerdem treten störende Reflexe in dem mikroskopischen Strahlengang auf, was zwar durch starkes Kippen des Modulators verringert werden könnte, wozu jedoch zusätzlich eine mechanisch sehr aufwendige Vorrichtung im Objektiv angeordnet werden müsste. Das Modulationskontrast-Verfahren nach Hoffman ist bekannt aus "Moderne Methoden der Lichtmikroskopie" von G. Göke, Reihe "Kosmos-Wissenschaft" Verlag Franck, Stuttgart, 1988.

Es ist daher die Aufgabe der vorliegenden Erfindung die Bildeigenschaften eines Modulators für Kontrastier-Verfahren in der Mikroskopie zu verbessern und dabei die Nachteile der bekannten Anordnungen zu vermeiden.

Diese Aufgabe wird erfindungsgemäß gelöst durch einen Hoffman-Modulator für Kontrastierverfahren in der Mikroskopie, der im visuellen Spektralbereich ein farbneutrales Absorptionsverhalten aufweist mit den kennzeichnenden Merkmalen des Anspruchs 1. Weitere vorteilhafte Ausgestaltungen ergeben sich aus den Unteransprüchen.

Die Erfindung geht von der Erkenntnis aus, dass dünne Schichten in Abhängigkeit von ihrer jeweiligen chemischen Zusammensetzung, ihrer Brechzahl und ihrer Dicke eine phasenschiebende Wirkung aufweisen.

Die US 4,960,310 beschreibt ein Absorptionsfilter, das im UV und visuellen Spektralbereich ein farbneutrales Absorptionsverhalten aufweist. Es besteht aus mehreren metallischen und dielektrischen Schichten, die auf einem transparenten Substrat aufgebracht sind. Eine Verwendung des Filters für die Modulationskontrast- Mikroskopie ist nicht beschrieben.

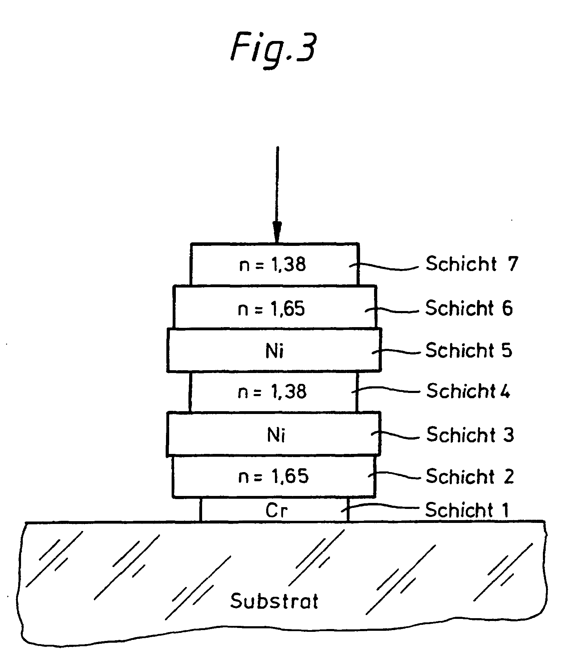

In Figur 3 ist der Aufbau eines erfindungsgemäßen Schichtsystems dargestellt. Auf einer Glas-(Träger-)Platte, die gewissermaßen als "Substrat" dient, befindet sich als Schicht Nr. 1 eine Chrom-Schicht mit einer Schichtdicke von 0,68 nm, gefolgt von einer Schicht Nr. 2, die aus einer Substanz "M2" besteht und eine Mischsubstanz der Firma Merck, Darmstadt, darstellt, wobei die Schichtdicke 32,30 nm und die Brechzahl 1,65 beträgt. Die substanz "M2" besitzt eine Materialzusammensetzung gemäβ der Formel La_{0.5} Al_{1.5} O₃, die Offenbart ist in der US 5,415,946. Die Schicht Nr. 3 besteht aus Nickel und weist eine Schichtdicke von 4,45 nm auf, gefolgt von der Schicht Nr. 4, welche aus Magnesiumfluorid mit einer Schichtdicke von 57,31 nm und einer Brechzahl von 1,38 besteht. Die Schicht Nr. 5 besteht aus Nickel und weist eine Schichtdicke von 1,89 nm auf, gefolgt von der Schicht Nr. 6, die wiederum aus der Substanz "M2" besteht und eine Schichtdicke von 37,14 nm sowie eine Brechzahl von 1,65 aufweist. Die Schicht Nr. 7 besteht erneut aus Magnesiumfluorid mit einer Brechzahl von 1,38 und einer Schichtdicke von 111,64 nm.

Es hat sich herausgestellt, dass Abweichungen der einzelnen Schichtdicken um etwa 10 % sowie geringe Brechzahl-Schwankungen sich nicht negativ auf die geforderten Eigenschaften auswirken; dies gilt insbesondere für den Betrag der Phasenschiebung.

Während die Schichten Nr. 4 bis 7 die Grundlage für die reflexmindernde Wirkung bilden, hat es sich erfindungsgemäß herausgestellt, dass die Schichten mit den Nummern 1, 3 und 5 die einfallende Lichtstrahlung derart absorbieren, dass der Transmissionsgrad neutral über den gesamten visuellen Bereich geschwächt wird. Überraschenderweise hat sich weiterhin ergeben, dass die Schicht Nr. 2 den Phasenschub des restlichen Schichtensystems auf Null korrigiert.

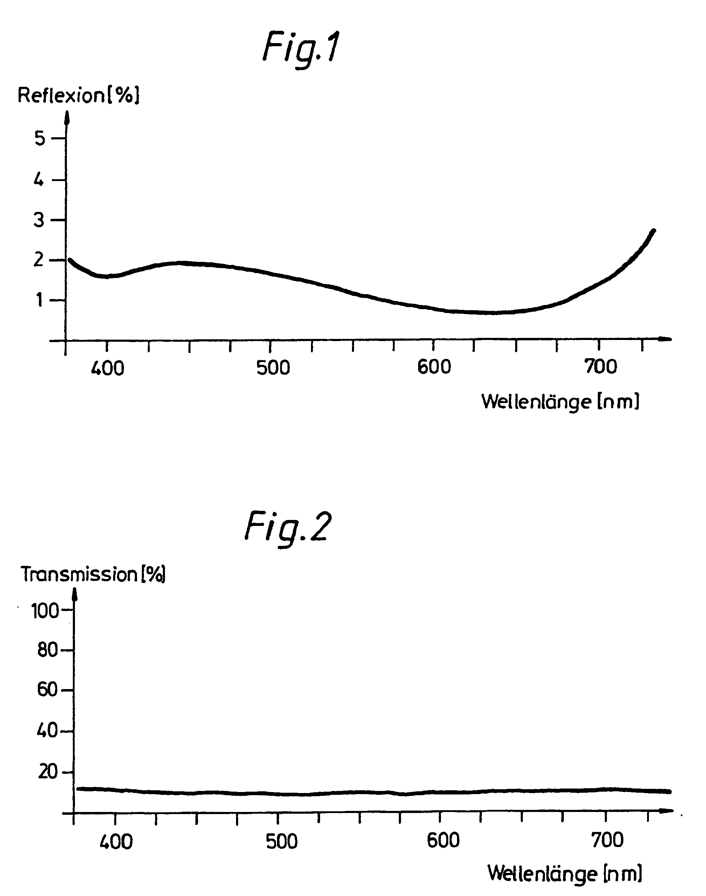

In Figur 1 ist die Restreflexion in Abhängigkeit von der Wellenlänge im sichtbaren Spektralbereich für ein erfindungsgemäßes Dünnschichtsystem dargestellt. Man erkennt, dass der Reflexionswert lediglich zwischen 0,8 und 2,0 % schwankt.

In Figur 2 ist die Transmission in Abhängigkeit von der Wellenlänge für ein erfindungsgemäßes Dünnschichtsystem dargestellt. Wie ersichtlich, liegen die Transmissionswerte zwischen 8 und 12 % innerhalb des visuellen Spektralbereichs.

Das erfindungsgemäße Dünnschichtsystem ist zwischen zwei Glasplatten eingekittet. Das Verhältnis der Gesamtdicken aller Schichten des Pakets zueinander regelt die Balance der Transmissionswerte zwischen den jeweiligen Enden des Spektralbereichs. Eine bevorzugte Anwendung dieses erfindungsgemäßen Schichtsystems ist im Bereich der Mikroskopie bei entsprechenden Kontrastier-Anordnungen und Verfahren gegeben.

## Patentansprüche

1. Hoffman-Modulator für Kontrastierverfahren in der Mikroskopie, der im visuellen Spektralbereich ein farbneutrales Absorptionsverhalten aufweist,
**dadurch gekennzeichnet,**
**dass** er ein absorbierendes Dünnschichtsystem, bestehend aus metallischen und dielektrischen Schichten, aufweist, das auf einem zentralbereich einer Glasplatte als Substrat aufgebracht ist und mit einer weiteren Glasplatte abgedeckt ist, wobei das Dünnschichtsystem eine annähernd konstante Transmission bei gleichzeitig geringer Restreflexion aufweist und so ausgebildet ist, dass der Modulator an einer einfallenden Lichtstrahlung einen Phasenschub gleich Null bewirkt.

2. Modulator nach Anspruch 1, **dadurch gekennzeichnet**,
(a) dass das Dünnschichtsystem aus drei metallischen und vier dielektrischen Schichten besteht,
(b) und dass die Transmission zwischen 8 und 12 % beträgt.

3. Modulator nach mindestens einem der vorhergehenden Ansprüche, **dadurch gekennzeichnet, dass** die Restrefiexion des Dünnschichtsystems kleiner als diejenige der unbeschichteten Glasplatte ist und zwischen 0,8 und 2 % beträgt.

4. Modulator nach mindestens einem der vorhergehenden Ansprüche, **dadurch gekennzeichnet, dass** das Dünnschichtsystem folgenden Schichtaufbau aufweist, wobei "M2" eine Mischsubstanz mit der Formel La_{0.5}Al_{1.5}O₃ ist und wobei die jeweilige Schichtdicke und die jeweilige Brechzahl um +/- 5 % variieren können:
| Schicht-Nr.: | Substanz: | Brechzahl (n): | Schichtdicke (nm): |
|---|---|---|---|
| 7 | MgF₂ | 1,38 | 111,64 |
| 6 | "M2" | 1,65 | 37,14 |
| 5 | Ni | - | 1,89 |
| 4 | MgF₂ | 1,38 | 57,31 |
| 3 | Ni | - | 4,45 |
| 2 | "M2" | 1,65 | 32,30 |
| 1 | Cr | - | 0,68 |
| Substrat: | Glas-Platte | - | - |

## Claims

1. Hoffman modulator for contrasting methods in microscopy, which has a colour-neutral absorption behaviour in the visible spectral region, **characterized in that** it includes an absorbent thin-film system, comprising metallic and dielectric films, which is applied to a central region of a glass plate as substrate and is covered with a further glass plate, the thin-film system having an approximately constant transmission combined, at the same time, with low residual reflection and being formed in such a way that the modulator effects a phase shift equal to zero on incident light radiation.

2. Modulator according to Claim 1, **characterized**
a) in that the thin-film system comprises three metallic films and four dielectric films,
b) and in that the transmission is between 8 and 12%.

3. Modulator according to at least one of the preceding claims, **characterized in that** the residual reflection of the thin-film system is lower than that of the uncoated glass plate and amounts to between 0.8 and 2%.

4. Modulator according to at least one of the preceding claims, **characterized in that** the thin-film system has the following film structure, in which "M2" is a mixed substance of formula La_{0.5}Al_{1.5}O₃ and in which the film thickness indicated and the refractive index indicated may in each case vary by ±5%:
| Film No.: | Substance: | Refractive index (n) : | Film thickness (nm) : |
|---|---|---|---|
| 7 | MgF₂ | 1.38 | 111.64 |
| 6 | "M2" | 1.65 | 37.14 |
| 5 | Ni | - | 1.89 |
| 4 | MgF₂ | 1.38 | 57.31 |
| 3 | Ni | - | 4.45 |
| 2 | "M2" | 1.65 | 32.30 |
| 1 | Cr | - | 0.68 |
| Substrate: | Glass plate | - | - |

## Revendications

1. Modulateur de Hoffmann pour des procédés par contraste en microscopie, qui présente un comportement d'absorption neutre aux couleurs dans le domaine visible du spectre, **caractérisé en ce qu'**il présente un système à couches minces absorbant, constitué de couches métalliques et de couches diélectriques, qui est déposé sur une zone centrale d'une plaque de verre servant de substrat et qui est recouvert par une autre plaque de verre, dans lequel le système à couches minces présente une transmission approximativement constante en même temps qu'une réflexion résiduelle faible et est configuré de telle façon que le modulateur provoque un déphasage égal à zéro dans un rayonnement lumineux incident.

2. Modulateur selon la revendication 1, **caractérisé en ce que**
(a) le système à couches minces se compose de trois couches métalliques et de quatre couches diélectriques, et
(b) la transmission vaut entre 8 et 12%.

3. Modulateur selon au moins une des revendications précédentes, **caractérisé en ce que** la réflexion résiduelle du système à couches minces est inférieure à celle de la plaque de verre non revêtue et vaut entre 0,8 et 2%.

4. Modulateur selon au moins une des revendications précédentes, **caractérisé en ce que** le système à couches minces présente la structure de couches suivante, "M2" étant une substance mixte avec la formule La_{0,5}Al_{1,5}O₃ et l'épaisseur de couche respective et l'indice de réfraction respectif pouvant varier de ± 5%:
| Couche n° | Substance | Indice de réfraction (n) | Epaisseur de couche (nm) |
|---|---|---|---|
| 7 | MgF₂ | 1,38 | 111,64 |
| 6 | "M2" | 1,65 | 37,14 |
| 5 | Ni | - | 1,89 |
| 4 | MgF₂ | 1,38 | 57,31 |
| 3 | Ni | - | 4,45 |
| 2 | "M2" | 1,65 | 32,30 |
| 1 | Cr | - | 0, 68 |
| Substrat | Plaque de | - | - |
| | verre | | |
